# EUROPEAN PATENT SPECIFICATION

(11) **EP 0 965 411 B1**
(45) Date of publication and mention of the grant of the patent: **04.02.2004**
(21) Application number: 99201563.6
(22) Date of filing: 19.05.1999
(51) Int. Cl.: B23K 35/28, B23K 35/36, C22C 18/04

(54) **Method of joining aluminium members to ferrous members, assembly of aluminium-ferrous members and the use of a pasty metal containing filler in such joining**
Verfahren zum Verbinden von Aluminiumteilen mit Eisenteilen, Zusammenbau von Aluminium- und Eisenteilen und Verwendung eines Metall enthaltenden pastösen Zusatzmaterials in diesem Verfahren
Procédé pour joindre des pièces en aluminium avec des pièces ferreuses,assemblage de pièces en aluminium et de pièces ferreuses et l'utilisation d'un matériau d'apport pâteux contenant du métal dans ledit procédé

(30) Priority: 22.05.1998 EP 98201710
(43) Date of publication of application: 22.12.1999
(73) Proprietor: Corus Staal BV, 1970 CA Ijmuiden (NL)
(72) Inventor: Van Veen, Johan Frank, 1827 GT Alkmaar (NL)
(74) Representative: Hansen, Willem Joseph Maria

(56) References cited:
- EP-A- 0 785 045
- DE-C- 946 405
- DE-U- 9 101 303
- US-A- 3 066 406
- US-A- 5 322 205
- US-A- 5 690 271
- CHEMICAL ABSTRACTS, vol. 99, no. 4, 25 July 1983 (1983-07-25) Columbus, Ohio, US; abstract no. 26683, OKAI, RIEI, JAPAN: "Solders for low-temperature application" XP002080302 & JP 58 041692 A (OKAI, RIEI, JAPAN)

## Description

The invention relates to a method for joining an aluminium member or a zinc-coated aluminium member to a ferrous member or a zinc-coated ferrous member using a pasty powder containing soldering filler, to an assembly of such joined members, and the invention further relates to the use of a pasty metal containing filler in such joining.

Within the scope of this invention aluminium is to be understood as to include aluminium alloys, for example aluminium alloys of the Aluminium Association AA1000, AA3000, AA5000, AA6000-series type. Zinc is to be understood as to include zinc alloys, in particular those zinc alloys known in the art for the use of electrolytic galvanised steel and/or aluminium. Ferrous is to be understood as the include steel, e.g. alloyed steel and low-carbon steel, and in particular steel alloys used in automotive and/or building applications. Members are to be understood as to include plate, sheet, extrusions, forgings, or shaped materials such as for example an automotive interior panel or exterior panel.

In the joining of aluminium members often the process of soldering and brazing are distinguished. Both processes employ a filler metal, which upon being melted, joins the members to be joined without melting these members. This opposed to the process of welding in which a substantial amount of the base metal of the members to be joined is melted.

Soldering and brazing distinguish by the liquidus temperature of the filler metal. In a brazing a high-melting filler metal is applied having a liquidus temperature above 450°C and below the solidus temperature of the base metal, whereas the solders used in soldering melt below 450°C, see ASM Specialty Handbook, Aluminium and Aluminium Alloys, ASM International, Materials Park, 3rd. printing, May 1994, p.420.

Usually aluminium members are brazed at temperatures ranging from 500 to 700°C in industrialised processes.

The joining of an aluminium or zinc-coated aluminium member to a ferrous or zinc-coated ferrous member has a potential use in construction applications, automotive applications, and domestic applications such as in cooking pans. In construction applications, e.g. roofing and facade constructions, the necessary soldering must be performed on site, and frequently in outdoor situations, and preferably under similar conditions and by applying similar techniques as are common in the craft of soldering metal members, e.g. soldering zinc sheets. In automotive applications the necessary soldering must able to be performed in a (semi-) automated manner, and must be able to compete with joining techniques like butt-welding of members of the same type. The joining of an aluminium based member to a ferrous based member, of which one or both members might be coated with zinc, by means of butt-welding on an industrial scale still meets several difficulties. An alternative joining technique is a subject ongoing research.

From US-A-5,322,205 a method is known for joining an aluminium member to a dissimilar metal member, excluding copper, by soldering through the use of a solder for said aluminium member, comprising the steps of plating a selected metal on a surface of said dissimilar metal member to be joined to said aluminium member, dipping said plated portion into a molten solder to form a layer of an intermetallic compound and an oxide on a surface of said plated portion, ultrasonically vibrating said plated portion while in said dipping state in said molten solder so as to peel off said layer of said intermetallic compound and said oxide together with said plating, thereby activating the surface of said dissimilar metal member and producing a wetting with the solder, and making the solder adhere to said activated surface of said dissimilar metal member. The use of flux is not necessary.

From EP-A-0785045 a pasty metal for soldering aluminium and aluminium alloys surfaces, comprising a filler, a binder and a flux, whereby said flux comprises the cesium fluoroaluminate reaction product of from about 30 to about 70 mole percent of CsF and from about 70 to about 25 mole percent of AlF₃, wherein the flux has a melting pint below about 440°C; and up to about 3 weight percent of unreacted CsF.

From DE-C-946405 a solder material for joining aluminium with steel is known, whereby the solder consists of an alloy of 70% zinc, 29.5% aluminium and 0.5% manganese and further a flux comprising of a mixture of 20 to 30% ZnCl₂, 15 to 20% CaCl₂, 30 to 40% KCl, 15 to 20% NaCl, 1.5% NaF and 3.5% KF.

From EP-B-0732983 a method is known for the production of large-area aluminium or aluminium-alloy plates to be fixed to iron-alloy workpieces, using a soldering paste consisting of a powder containing aluminium in a range of 80 to 90% and silicon in a range of 20 to 10 %, a flux containing approximately 50% potassium fluoride and approximately 50% aluminium fluoride, and further a binder. According to the known method first the soldering paste is sprayed on to the plate, dried and age-hardened. Subsequently the soldering paste is then fixed in second operation by spraying on the binder solution. A disadvantage of the known method of joining the two different metal type members is that it is a time consuming method dedicated for use in cooking ware, which method further includes multiple process steps. A further disadvantage of the known process is that the method cannot readily be applied on a construction site.

An object of the invention is to provide a method which is applicable under the described circumstances.

The method of the invention as disclosed in claim 1 is characterised in the introduction of the pasty filler contains 60 to 80 wt.% of a mixture of powdered metals, that said mixture mainly comprises an aluminium-zinc alloy with a liquidus temperature of below 419°C and that said alloy contains aluminium in the range of 1.5 to 18 wt.%, the balance being essentially zinc and impurities, that the pasty filler further comprises 40 to 20 wt.% of an inorganic, fluorides containing flux material and that further the heating of the pasty filler is performed at a temperature below 430°C.

In accordance with the method of the invention it is achieved that a pasty filler has been provided which enables to join an aluminium or a zinc-coated aluminium member to a ferrous or to a zinc-coated ferrous member at least one of members has a thin zinc coating. Applying the pasty filler can be done in a simple method, either manually or in an automated manner. Further it is achieved that the filler can be applied on a construction site, as well as in an industrial (semi-) automated manner. A further advantage is that the thin zinc coating is not interrupted.

Suitable flux materials containing fluorides are known per se. For instance they have been described in EP-A-0355987. The composition of the flux material may be adapted case to case to the composition of the filler and to the use of zinc-coated or non-coated aluminium member and/or to the use of zinc-coated or non-coated ferrous member.

The pasty filler comprises 60 to 80 wt.% of the powdered aluminium-zinc alloy, preferably in the range 65 to 75 wt.% and more preferably in the range 67 to 72 wt.%, and 40 to 20 wt.% of the inorganic, fluorides containing flux. A particular blend of the flux comprises aluminium fluoride, potassium fluoride, or complexed with each other. Further, the inorganic flux comprises at least also the element cesium or salt complexes thereof. The flux may further comprise a paste vehicle, preferably conventional, e.g. solid grade poly-isobutylene.

More preferably the said aluminium-zinc alloy has a liquidus temperature in the range of 370-400°C, which means that melting of such an alloy already can be achieved well below 419°C, i.e. below the liquidus temperature of the zinc coating.

Because of the selected flux material the molten filler metal was found to be able to make a good joint when a zinc-coated member is used without disrupting said coating.

The best results for a good joint were found to be achievable by making use of an aluminium-zinc alloy containing aluminium in the range of 1.5 to 5.0 wt.%, and preferably in the range of 1.5 to 2.5 wt.%. An aluminium-zinc alloy having 2 wt.% aluminium has a solidus temperature of about 378°C and a liquidus temperature of 388°C. The metal powder used has preferably a nominal powdered filler metal mesh size passing U.S. Standard Sieve No. -100 +200.

It is clear that when a zinc coating is applied to the members that the thicker the zinc coating the more the soldering will be similar to the soldering of a zinc member. On the other end it was found to be preferable according to the invention that the zinc-coated aluminium members have a zinc coating with a weight in the range of 10 to 300 g/m2. In the embodiment where a zinc-coated ferrous member is used it has been found according to the invention that the zinc coating has preferable a weight in the range of 40 to 250 g/m2.

In the embodiment where a zinc-coated member is used a strong joint is found also to depend upon the connection between the aluminium member and/or steel member and the zinc-coating. Best results were obtained in accordance with the invention if the zinc-coating is produced by electrolytic deposition, for example by a process for zinc-coated aluminium sheet material described in the international patent application no. WO-A-97/43467.

In the common soldering of for instance zinc sheets the method solder may flow into the joint, even if the non-melted solder is melted adjacent to the joint.

In the embodiment where the aluminium member is not zinc-coated, the members are preferably pretreated by means of etching. A preferred etching pretreatment includes first an etch in a alkaline environment, followed by an etch in an acidic environment. The etching pretreatment has been found to be particular useful in case the aluminium member is made of an AA5000-series aluminium alloy, more in particular for those having a magnesium content 3 wt.% or more.

In applying the new method it has been found to be advantageous if the pasty filler is applied between the members where the joint is to result. The best results have been obtained where the overlap of the two members to be joined is in the range of 5 to 25mm, and preferably in the range of 5 to 15mm.

It is regarded as a definite advantage of the new method that it can be performed under outdoor circumstances, e.g. on a construction site. According to the invention the heating of the pasty filler can be performed by waving a flame across the pre-assembled joint region until the pasty filler liquidize and flows.

In another embodiment the heating of the pasty filler can be performed by electrical resistance heating, whereas other heating methods, such as induction heating are also applicable. An advantage of this method of heating of the pasty filler is that it can be applied manually, e.g. at a construction site, as well as in an (semi-) automated manner in an assembling or pre-assembling line for the production of for example automotive components. A further advantage of this method is that the heat required to liquidize and to flow the pasty filler can be applied very locally and accurately, and further that the possible effect of discoloured joint members does not occur.

In a further aspect the invention consists in an assembly of a soldered aluminium or zinc-coated aluminium member to a ferrous or zinc-coated ferrous member containing in the joint an aluminium-zinc alloy with a liquidus temperature below 419°C and containing aluminium in a range of 1.5 to 18 wt.%, the balance being zinc and impurities, produced by the method in accordance with the invention.

In another aspect the invention also consists in the use of a pasty metal containing filler, comprising 60 to 80 wt.% of a mixture of powdered metals, said mixture mainly comprising an aluminium-zinc alloy with a liquidus temperature below 419°C and containing aluminium in a range of 1.5 to 18 wt.%, the balance being zinc and impurities, the pasty filler further comprising 40 to 20 wt.% of an inorganic, fluorides containing flux material, for joining aluminium or zinc-coated aluminium members to ferrous or to zinc-coated ferrous members, at least one of said members is zink coated.

Examples:
In a test two strips of non-coated aluminium of the AA3003-type and non-coated low-carbon steel were joined in air according to the new method. The overlap of the two strips was 10 mm. The assembly was heated to about 400°C by using a natural gas-air torch. The filler used comprised 70 wt.% of powdered zinc-aluminium alloy, with an aluminium content of 2 wt.%, balance essentially zinc. The resulting test piece was subjected to a tensile test in accordance with ASTM D1002-94, in which an average shear strength of the joint was found of 15 MPa.
In a second test two strips of zinc-coated aluminium of the AA3004-type and zinc-coated low-carbon steel were joined in air according to the new method using the same filler composition and method of heating as in the first test. The resulting test piece was subjected to a tensile test in accordance with ASTM D1002-94, in which an average shear strength of the joint was found of 14 MPa. This means that in many cases the joints are stronger than the aluminium base sheet material.

Even after subjecting the joined members to the Atmospheric Building Corrosion Test, as described by B. Boelen in the article "New Product Test: The Atmospheric Building Corrosion Test (ABC Test)", published on the occasion of the ECCA Autumn Congress in Brussels on 27-28 November 1995, for several months no corrosion of the joint was observed.

## Claims

1. Method of joining an aluminium member or a zinc-coated aluminium member to a ferrous member or to a zinc-coated ferrous member, and whereby at least the aluminium member or the ferrous member is zinc-coated, while applying a pasty metal containing filler in the joint region and thereupon heating of the pasty filler and subsequently cooling of the joint region, whereby the pasty filler contains 60-80 wt.% of a mixture of powdered metals, said mixture mainly comprising an aluminium-zinc alloy with a liquidus temperature below 419°C and containing aluminium in a range of 1.5 to 18 wt.%, the balance being zinc and impurities, the pasty filler further comprising 40 to 20 wt.% of an inorganic, fluorides containing flux material, and whereby the heating of the pasty filler is performed at a temperature below 430°C.

2. Method according to claim 1, wherein the aluminium-zinc alloy contains aluminium in a range of 1.5 to 5.0 wt.%, and preferably in a range of 1.5 to 2.5 wt.%.

3. Method according to claim 1 or 2, wherein weight of the zinc coating of the zinc-coated aluminium members is from 10 to 300 g/m2.

4. Method according to any one of claims 1 to 3, wherein the weight of the zinc coating of the zinc-coated ferrous members is from 40 to 250 g/m2.

5. Method according to any one of claims 1 to 4, wherein the zinc coating of the zinc-coated aluminium members and/or zinc-coated ferrous members is obtained by electrolytic deposition.

6. Method according to any one of claims 1 to 5, wherein the pasty filler is applied between the members where the joint is to result.

7. Method according to any one of claims 1 to 6, wherein the heating of the pasty filler is performed by waving a flame across the pre-assembled joint until the pasty filler liquidize and flows.

8. Method according to any one of claims 1 to 6, wherein the heating of the pasty filler is performed by electrical resistance heating.

9. Assembly of a soldered aluminium or zinc-coated aluminium member to a ferrous or zinc-coated ferrous member containing in the joint an aluminium-zinc alloy with a liquidus temperature below 419°C said alloy containing aluminium in a range of 1.5 to 18 wt.%, the balance being zinc and impurities, produced by a method in accordance with any one of claims 1 to 8.

10. Use of a pasty metal containing filler, comprising 60 to 80 wt.% of a mixture of powdered metals, said mixture mainly comprising an aluminium-zinc alloy with a liquidus temperature below 419°C and containing aluminium in a range of 1.5 to 18 wt.%, the balance being zinc and impurities, the filler further comprising 40 to 20 wt.% of an inorganic, fluorides containing flux material, for joining aluminium or zinc-coated aluminium members to ferrous or to zinc-coated ferrous members, whereby at least the aluminium member of the ferrous member is zinc-coated.

## Patentansprüche

1. Verfahren zum Verbinden eines Aluminiumteils oder eines zinkbeschichteten Aluminiumteils mit einem Eisenteil oder einem zinkbeschichteten Eisenteil, wobei wenigstens das Aluminiumteil oder das Eisenteil mit einer Zinkbeschichtung versehen ist, durch Aufbringen bzw. Auftragen eines pastösen Metall enthaltenden Lötzusatzmaterials im Verbindungsabschnitt, anschließendes Erhitzen des pastösen Zusatzmaterials und nachfolgendes Abkühlen des Verbindungsabschnitts, wobei das pastöse Zusatzmaterial 60 bis 80 Gew.-% einer Mischung von pulverisierten Metallen enthält, wobei die Mischung hauptsächlich eine Aluminiumzinklegierung mit einer Liquidustemperatur unter 419°C und Aluminium im Bereich von 1,5 bis 18 Gew.-% enthält, Rest Zink und Verunreinigungen, wobei das pastöse Zusatzmaterial weiterhin 40 bis 20 Gew.-% eines anorganischen, fluridhaltigen Flussmittels aufweist, und wobei das Erwärmen des pastösen Zusatzmaterial bei einer Temperatur unter 430°C ausgeführt wird.

2. Verfahren gemäß Anspruch 1, wobei die Aluminiumzinklegierung Aluminium im Bereich von 1,5 bis 5,0 Gew.-% und vorzugsweise in einem Bereich von 1,5 bis 2,5 Gew.-% enthält.

3. Verfahren gemäß Anspruch 1 oder 2, wobei das Gewicht der Zinkbeschichtung der zinkbeschichteten Aluminiumteile zwischen 10 und 300g/m² ist.

4. Verfahren gemäß einem der Ansprüche 1 bis 3, wobei das Gewicht der Zinkbeschichtung der zinkbeschichteten Eisenteile zwischen 40 und 250 g/² ist.

5. Verfahren gemäß einem der Ansprüche 1 bis 4, wobei die Zinkbeschichtung der zinkbeschichteten Aluminiumteile und/oder zinkbeschichteten Eisenteile durch elektrolytisches Aufbringen gebildet wird.

6. Verfahren gemäß einem der Ansprüche 1 bis 5, wobei das pastöse Zusatzmaterial zwischen den Teilen, dort wo die Verbindungsnaht entstehen soll, aufgebracht wird.

7. Verfahren gemäß einem der Ansprüche 1 bis 6, wobei das Erwärmen des pastösen Zusatzmaterials durch Schwenken einer Flamme über die vormontierten Verbindungsnaht, bis das pastöse Zusatzmaterial flüssig wird und fließt, durchgeführt wird.

8. Verfahren gemäß einem der Ansprüche 1 bis 6, wobei das Erwärmen des pastösen Zusatzmaterials durch elektrisches Widerstandserwärmen durchgeführt wird.

9. Zusammenbau bzw. Anordnung aus einem weichgelöteten Aluminiumteil oder zinkbeschichteten Aluminiumteil mit einem Eisenteil oder einem zinkbeschichteten Eisenteil, der bzw. die an der Verbindungsnaht eine Aluminiumzinklegierung mit einer Liquidustemperatur unter 419°C aufweist, wobei die Legierung Aluminium im Bereich von 1,5 bis 18 Gew.-%, Rest Zink und Verunreinigungen, aufweist, hergestellt nach einem Verfahren gemäß einem der Ansprüche 1 bis 8.

10. Verwendung eines pastösen Zusatzmaterials aufweisend 60 bis 80 Gew.-% einer Mischung von pulverisierten Metallen, wobei die Mischung hauptsächlich eine Aluminiumzinklegierung mit einer Liquidustemperatur unter 419°C und einem Aluminiumgehalt im Bereich von 1,5 bis 18 Gew.-%, Rest Zink und Verunreinigungen, aufweist, wobei das Zusatzmaterial weiterhin 40 bis 20 Gew.-% eines anorganischen, fluridhaltigen Flussmittels aufweist, um Aluminiumteile oder zinkbeschichtete Aluminiumteile mit Eisenteilen oder zinkbeschichteten Eisenteilen zu verbinden, wobei wenigstens das Aluminiumteil oder das Eisenteil mit Zink beschichtet ist.

## Revendications

1. Procédé pour joindre une pièce en aluminium ou une pièce en aluminium zingué à une pièce ferreuse ou à une pièce ferreuse zinguée, et par lequel au moins la pièce en aluminium ou la pièce ferreuse est zinguée, en appliquant dans la région d'assemblage un matériau d'apport pâteux contenant du métal et en chauffant ensuite le matériau d'apport pâteux, puis en refroidissant la région du joint, à la suite de quoi le matériau d'apport pâteux contient 60 à 80% d'un mélange de métaux en poudre, ledit mélange étant principalement constitué d'un alliage d'aluminium et de zinc à température de liquidus inférieure à 419°C et contenant de l'aluminium dans une proportion de 1,5 à 18% en poids, le reste étant composé de zinc et d'impuretés, le matériau d'apport pâteux contenant en outre 40 à 20% en poids d'un fondant inorganique contenant des fluorures, et à la suite de quoi le matériau d'apport pâteux est chauffé à une température inférieure à 430°C.

2. Procédé selon la revendication 1, dans lequel l'alliage d'aluminium et de zinc contient de l'aluminium dans une proportion de 1,5 à 5,0% en poids, et de préférence dans une proportion de 1,5 à 2,5% en poids.

3. Procédé selon la revendication 1 ou 2, dans lequel le poids du revêtement de zinc des pièces en aluminium zingué est compris entre 10 et 30 g/m²..

4. Procédé selon l'une quelconque des revendications 1 à 3, dans lequel le poids du revêtement de zinc des pièces ferreuses zinguées est compris entre 40 et 250 g/m².

5. Procédé selon l'une quelconque des revendications 1 à 4, dans lequel le revêtement de zinc des pièces en aluminium zingué et/ou des pièces ferreuses zinguées est obtenu par dépôt électrolytique.

6. Procédé selon l'une quelconque des revendications 1 à 5, dans lequel le matériau d'apport pâteux est appliqué entre les pièces à l'endroit du futur joint.

7. Procédé selon l'une quelconque des revendications 1 à 6, dans lequel le matériau d'apport pâteux est chauffé en passant une flamme d'un côté à l'autre du joint pré-assemblé jusqu'à ce que le matériau d'apport se liquéfie et coule.

8. Procédé selon l'une quelconque des revendications 1 à 6, dans lequel le matériau d'apport pâteux est chauffé par chauffage électrique par résistance.

9. Assemblage d'une pièce brasée en aluminium ou en aluminium zingué avec une pièce ferreuse ou ferreuse zinguée contenant dans le joint un alliage d'aluminium et de zinc à température de liquidus inférieure à 419°C, ledit alliage contenant de l'aluminium dans une proportion de 1,5 à 18% en poids, le reste étant composé de zinc et d'impuretés, réalisé selon l'une quelconque des revendications 1 à 8.

10. Utilisation d'un matériau d'apport pâteux contenant du métal, comprenant 60 à 80% en poids d'un mélange de métaux en poudre, ledit mélange étant principalement constitué d'un alliage d'aluminium et de zinc à température de liquidus inférieure à 419°C et contenant de l'aluminium dans une proportion de 1,5 à 18% en poids, le reste étant composé de zinc et d'impuretés, le matériau d'apport pâteux contenant en outre 40 à 20% en poids d'un fondant inorganique contenant des fluorures, pour joindre des pièces en aluminium ou en aluminium zingué à des pièces ferreuses ou ferreuses zinguées, à la suite de quoi au moins la pièce en aluminium ou la pièce ferreuse est zinguée.
